# EUROPÄISCHE PATENTANMELDUNG

(11) **EP 0 895 879 A2**
(43) Veröffentlichungstag der Anmeldung: **10.02.1999**
(21) Anmeldenummer: 98114613.7
(22) Anmeldetag: 04.08.1998
(51) Int. Cl.: B60C 23/04

(54) **Verfahren zur Durchführung der Zuordnung der Radposition zu Reifendruckkontrollvorrichtungen in einem Reifendruckkontrollsystem eines Kraftfahrzeuges**

(30) Priorität: 08.08.1997 DE 19734323
(71) Anmelder: Continental Aktiengesellschaft, 30165 Hannover (DE)
(72) Erfinder: Oldenettel, Holger, 30826 Garbsen (DE)

(57) **Zusammenfassung**

Die Erfindung betrifft ein Verfahren zur Durchführung der Zuordnung der Radposition zu Reifendruckkontrollvorrichtungen 6a - 6d in einem Reifendruckkontrollsystem eines Kraftfahrzeuges. Die Reifendruckkontrollvorrichtungen 6a - 6d senden in vorgegebenen zeitlichen Abständen ihre individuelle Kennung an die Zentraleinheit 10 des Reifendruckkontrollsystems. Zu den Sendezeitpunkten nimmt das Rad, von welchem aus die individuelle Kennung übermittelt wird, eine definierte Winkelposition ein, so dass zwischen zwei Sendezeitpunkten ein definierter Winkelversatz vorliegt. Die von den Drehzahlsensoren 4a - 4d gelieferten Umdrehungssignale werden in der Zentraleinheit 10 dahingehend überprüft, welches Umdrehungssignal den gleichen Winkelversatz aufweist. In der Zentraleinheit 10 wird die Reifendruckkontrollvorrichtung 6a - 6d derjenigen Radposition zugeordnet, dessen Drehzahlsensor 4a - 4d ebenfalls den vorgegebenen Winkelversatz gemessen hat.

## Beschreibung

Die Erfindung betrifft ein Verfahren zur Durchführung der Zuordnung von Reifendruckkontrollvorrichtungen zu Radpositionen in einem Reifendruckkontrollsystem eines Kraftfahrzeuges gemäß dem Oberbegriff des Anspruchs 1. Die Erfindung betrifft ferner eine Reifendruckkontrollvorrichtung gemäß dem Oberbegriff des Anspruchs 4.

Aus sicherheitstechnischen Gründen muss der Reifendruck von Kraftfahrzeugreifen regelmäßig überprüft werden, was von dem Kraftfahrzeugführer aus unterschiedlichen Gründen häufig versäumt wird. Deshalb sind bereits Reifendruckkontrollsysteme entwickelt worden, die jedem Rad zugeordnet eine Reifendruckkontrollvorrichtung enthalten, die den Reifendruck der Kraftfahrzeugreifen automatisch messen und zumindest eine kritische Abweichung von dem Sollreifendruck dem Kraftfahrzeugführer melden. Die Reifendruckkontrollvorrichtungen können z.B. in den Reifen einvulkanisiert oder eingeklebt sein oder auch am oder im Ventil bzw. an oder in der Felge befestigt sein. Entsprechende Ausbildungen sind bekannt.

Aus der DE 42 05 911 A1 ist ein Reifendruckkontrollsystem bekannt, bei dem jedem Reifen des Kraftfahrzeuges jeweils eine Reifendruckkontrollvorrichtung zugeordnet ist. Jede Reifendruckkontrollvorrichtung übermittelt in regelmäßigen Abständen ein gemessenes Drucksignal zusammen mit einer individuellen Kennung an eine Zentraleinheit. Durch die Übermittlung einer individuellen Kennung wird vermieden, dass die an die Zentraleinheit übermittelten Daten beispielsweise mit Daten verwechselt werden, die von einem anderen Kraftfahrzeug ausgesendet werden. In der Zentraleinheit sind Wertepaare der Form (Kennung der Reifendruckkontrollvorrichtung/Radposition) für jedes Rad des Kraftfahrzeuges gespeichert, so dass durch entsprechenden Vergleich in der Zentraleinheit darauf geschlossen werden kann, welche Kennung mit dem dazugehörigen Drucksignal von welcher Radposition des Kraftfahrzeuges gesendet wird. Eine Abweichung des übermittelten Drucksignals von einem vorgegebenen Wert an einer Radposition wird dem Kraftfahrzeugführer von der Zentraleinheit angezeigt, so dass dieser geeignete Maßnahmen einleiten kann.

Die Ausführungen zeigen, dass das aus der DE 42 05 911 A1 bekannte Reifendruckkontrollsystem nur dann einwandfrei funktionieren kann, wenn in der Zentraleinheit die Zuordnungen (Kennung der Reifendruckkontrollvorrichtungen/Radposition) richtig gespeichert sind. Dementsprechend muss zumindest nach jedem Reifenwechsel am Kraftfahrzeug eine neue Zuordnung vorgenommen werden, was in einem Zuordnungsmodus des Reifendruckkontrollsystems geschieht. Bei dem aus der DE 42 05 911 A1 bekannten Reifendruckkontrollsystem wird eine neue Zuordnung durchgeführt, indem die Intensität der von den einzelnen Reifendruckkontrollvorrichtungen gesendeten Signale von Empfängern, von denen jeweils einer einer Radposition fest zugeordnet ist, gemessen wird und jedes von einer Reifendruckkontrollvorrichtung ausgesendete Signal der Radposition des Kraftfahrzeuges zugeordnet wird, an welcher es die höchste Signalintensität erzeugt (beispielsweise wird die Signalintensität der Reifendruckkontrollvorrichtung, die sich in dem Reifen vorne links befindet, an dem Empfänger am größten sein, der der Radposition vorne links zugeordnet ist, so dass eine entsprechende Zuordnung festgestellt werden kann). Die entsprechenden Zuordnungen werden in der Zentraleinheit gespeichert.

Für das erläuterte Zuordnungsverfahren ist an jeder Radposition des Kraftfahrzeuges ein Empfänger notwendig, wodurch die Kosten des aus der DE 42 05 911 A1 bekannten Reifendruckkontrollsystems in die Höhe getrieben werden. Aus der nachveröffentlichten deutschen Patentanmeldung mit dem Aktenzeichen 196 18 658.7 ist ein Reifendruckkontrollsystem bekannt, bei dem eine neue Zuordnung der Reifendruckkontrollvorrichtungen zu den Radpositionen mit Hilfe lediglich eines Empfängers im Kraftfahrzeug durchgeführt werden kann, so dass sich gegenüber dem aus der DE 42 05 911 A1 bekannten Reifendruckkontrollsystem ein Kostenvorteil ergibt. Der Grundgedanke des aus der nachveröffentlichten deutschen Patentanmeldung mit dem Aktenzeichen 196 18 658.7 bekannten Zuordnungsverfahren ist darin zu sehen, dass eine Messgröße an jeder Radposition des Kraftfahrzeuges durch zwei unabhängige Messvorrichtungen gemessen wird, wobei von der einen Messvorrichtung die Radposition bekannt ist und die andere Messvorrichtung Bestandteil der Reifendruckkontrollvorrichtung ist, die sich im Reifen des Kraftfahrzeugrades befindet. Bei der ersten Messvorrichtung kann es sich beispielsweise um einen ABS-Sensor und bei der zweiten Messvorrichtung um einen Umdrehungssensor handeln, der der jeweiligen Reifendruckkontrollvorrichtung zugeordnet ist. Mit den Sensoren werden im Zuordnungsmodus unabhängig voneinander die Drehzahlen der Kraftfahrzeugräder gemessen und die Kennung einer Reifendruckkontrollvorrichtung wird derjenigen Radposition zugeordnet, an der von dem ABS-Sensor und einem Umdrehungssensor die gleiche Drehzahl gemessen wurde.

Da es sich bei den Reifendruckkontrollvorrichtungen, denen die Umdrehungssensoren zugeordnet sind, lediglich um Sender handelt, die selbst keinerlei Daten empfangen können, kann an die Reifendruckkontrollvorrichtungen nicht die Information übermittelt werden, dass in dem Reifendruckkontrollsystem aufgrund eines Reifenwechsels eine neue Zuordnung durchgeführt werden muss. Die Reifendruckkontrollvorrichtungen in den Rädern des Kraftfahrzeuges 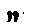 müssen also davon ausgehen", dass sich das Reifendruckkontrollsystem ständig im Zuordnungsmodus befindet. Aus diesem Grunde wird von den Umdrehungssensoren ständig die Umdrehungszahl der Räder gemessen und das aufgenommene Signal wird ständig verstärkt, damit es eine ausreichende Signalstärke aufweist. Das belastet die Batterien der Reifendruckkontrollvorrichtungen, wodurch deren Lebensdauer eingeschränkt wird. Eine erwünschte Batterielebensdauer von mindestens fünf Jahren ist aufgrund dieser Belastung nur schwierig zu erreichen.

Der Erfindung liegt die Aufgabe zugrunde, ein Verfahren zur Durchführung von Reifendruckkontrollvorrichtungen zu Radpositionen in einem Reifendruckkontrollsystem eines Kraftfahrzeuges zu schaffen, mit dem der Energieverbrauch der Energiespeicher der Reifendruckkontrollvorrichtungen minimiert werden kann. Der Erfindung liegt ferner die Aufgabe zugrunde, eine Reifendruckontrollvorrichtung zu schaffen, mit der das Verfahren durchführbar ist.

Die Aufgabe wird durch die kennzeichnenden Merkmale des Anspruchs 1 gelöst. Die Aufgabe wird ferner durch die kennzeichnenden Merkmale des nebengeordneten Anspruchs 6 gelöst.

Das Verfahren macht sich zunutze, dass bei einem Fahrzeug die Räder unterschiedliche Umdrehungszahlen, bedingt durch Schlupf, unterschiedliche Reifenradien, Kurvenfahrt etc., aufweisen.

Der Grundgedanke der Erfindung ist in der Erkenntnis zu sehen, dass es für die Durchführung des Zuordnungsverfahrens ausreichend ist, mit Hilfe der Umdrehungssensoren zu zwei vorgegebenen Zeitpunkten den Winkelversatz eines Rades eines Kraftfahrzeuges zu messen. Aus den Signalen der ABS-Drehzahlsensoren wird dann festgestellt, an welchem Rad des Kraftfahrzeuges der entsprechende Winkelversatz vorliegt und es wird eine entsprechende Zuordnung getroffen.

Die Vorteile der Erfindung sind insbesondere darin zu sehen, dass die den Reifendruckkontrollvorrichtungen zugeordneten Umdrehungssensoren nur noch in kurzen Zeitintervallen mit Energie der Reifendruckkontrollvorrichtungen versorgt zu werden brauchen. Die Energiespeicher werden durch die Umdrehungssensoren also nur während kurzer Zeitabschnitte belastet, so dass sich ihre Lebensdauer beträchtlich erhöht. Ein weiterer Vorteil der Erfindung ist darin zu sehen, dass das Zuordnungsverfahren dennoch mit einer großen Zuverlässigkeit durchgeführt werden kann.

Gemäß einer Weiterbildung des Verfahrens nach Anspruch 2 stimmt die erste definierte Winkelposition mit der zweiten definierten Winkelposition überein, so dass das Rad in dem Zeitintervall von dem ersten Zeitpunkt bis zu dem zweiten Zeitpunkt eine ganzzahlige Anzahl von Umdrehungen vollführt. In diesem Fall brauchen die Signale der Drehzahlsensoren also nur darauf überprüft zu werden, welcher Drehzahlsensor in dem Zeitintervall von dem ersten Zeitpunkt bis zu dem zweiten Zeitpunkt ebenfalls eine ganzzahlige Anzahl von Umdrehungen registriert hat, wodurch sich das Verfahren vereinfacht.

Gemäß einem Ausführungsbeispiel des Verfahrens nach Anspruch 3 umfassen die Zeitintervalle, in denen die den Reifendruckkontrollvorrichtungen angeordneten Sensoren eingeschaltet werden, eine fest vorgegebene Zeitspanne. Vorzugsweise ist diese Zeitspanne so bemessen, dass in einem breiten Geschwindigkeitsbereich des Fahrzeuges innerhalb der Zeitspanne das entsprechende Rad die definierte Winkelposition einnimmt. Als geeignete Zeitspanne kann z.B. eine Sekunde vorgegeben werden.

Gemäß einem alternativen Ausführungsbeispiel des Verfahrens nach Anspruch 4 werden die den Reifendruckkontrollvorrichtungen zugeordneten Sensoren unmittelbar nach dem Zeitpunkt ausgeschaltet, in dem das von dem Sensor erzeugte Signal die definierte Winkelposition anzeigt. Der Vorteil dieses Ausführungsbeispiels ist darin zu sehen, dass die Sensoren nur so lange wie unbedingt notwendig eingeschaltet bleiben. Sollte bei dem Ausführungsbeispiel nach Anspruch 4 die definierte Winkelposition nach dem Einschalten eines Sensors nicht nach einer vorgegebenen Zeitspanne (von z.B. zwei Sekunden) eingenommen worden sein, so wird der Sensor nach Ablauf dieser Zeitspanne automatisch ausgeschaltet. Durch diese Maßnahme wird verhindert, dass der Sensor bei einem sehr langsam fahrenden oder stehenden Fahrzeug über einen langen Zeitraum eingeschaltet bleibt.

Gemäß einer Weiterbildung des Verfahrens nach Anspruch 5 wird zu dem zweiten Zeitpunkt neben der individuellen Kennung zumindest die Dauer T der letzten Umdrehung des Rades, die das Rad vor der Datenübermittlung gemacht hat, von der Reifendruckkontrollvorrichtung an die Zentraleinheit übermittelt. Der Vorteil dieser Weiterbildung ist darin zu sehen, dass in der Zentraleinheit geprüft werden kann, ob die übermittelte Dauer T in einem starken Maße von den Umdrehungsdauern abweicht, die von den Drehzahlsensoren geliefert werden. Ist dies der Fall, so ist dies für die Zentraleinheit ein Anzeichen dafür, dass der Umdrehungssensor während der Aufnahme des Messsignals beispielsweise infolge von Fahrbahnunebenheiten ein falsches Signal erzeugt hat. Es findet dann findet keine Auswertung der Daten des letzten Zeitintervalls in der Zentraleinheit statt.

Weitere Vorteile und ein Ausführungsbeispiel der Erfindung werden in dem Zusammenhang mit den nachstehenden Figuren erläutert, darin zeigt:
Figur 1 ein Kraftfahrzeug mit einem Reifendruckkontrollsystem
Figur 2 ein Kraftfahrzeugrad mit einem Umdrehungssensor
Figur 3 ein Diagramm
Figur 4 ein Diagramm
Figur 5 eine Reifendruckkontrollvorrichtung:

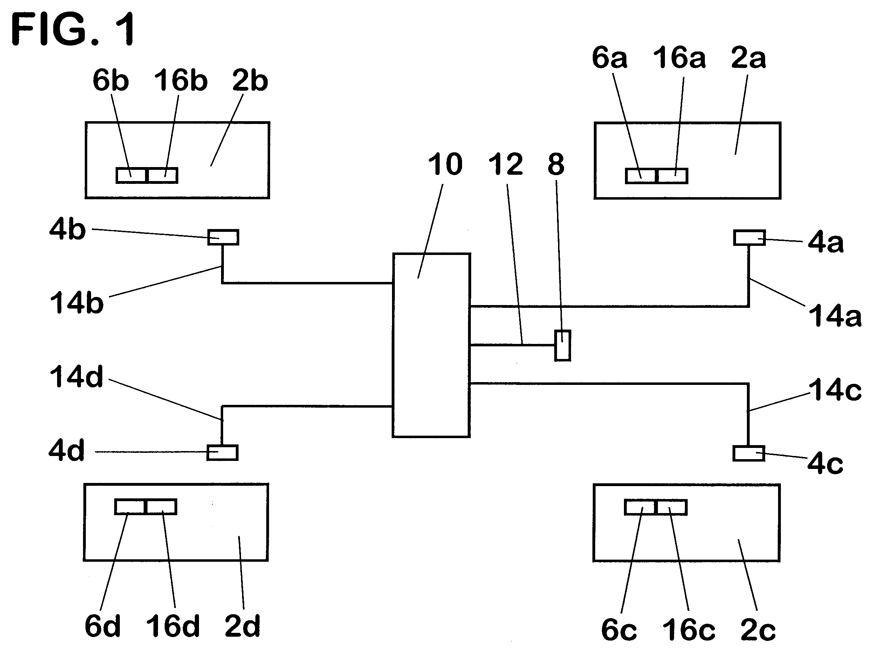

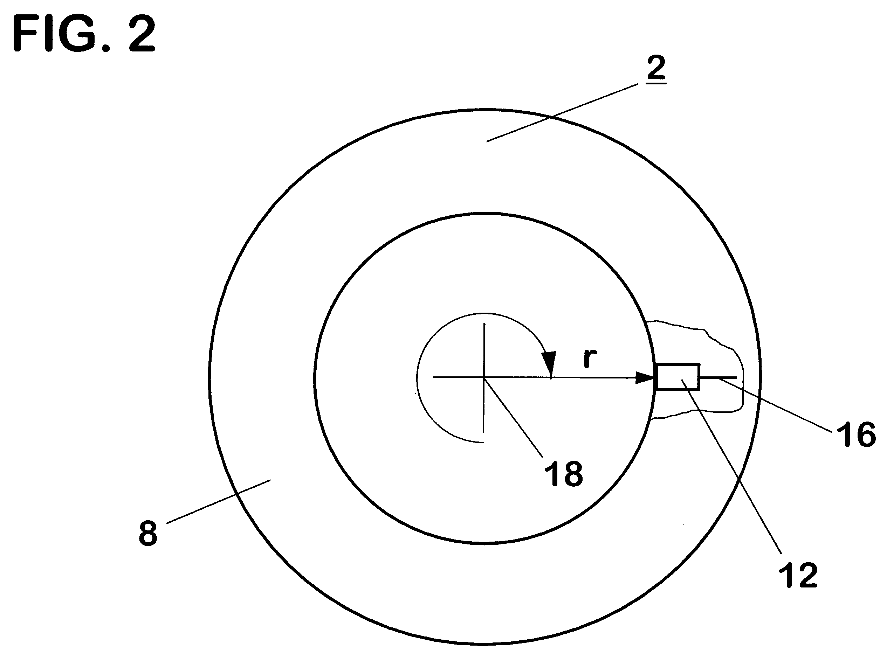

Die Figur 1 zeigt in stark schematisierter Darstellung ein Kraftfahrzeug mit Rädern 2a bis 2d, das über ein Reifendruckkontrollsystem verfügt. Das Reifendruckkontrollsystem enthält u.a. Reifendruckkontrollvorrichtungen 6a bis 6d, von denen jeweils eine in dem Reifen der Kraftfahrzeugräder 2a bis 2d enthalten ist, (z.B. im Reifengummi bzw. im oder am Ventil) oder von denen jeweils eine einem Reifen zugeordnet ist, z.B. durch entsprechende Positionierung und Befestigung an der Felge. Die Reifendruckkontrollvorrichtungen 6a bis 6d vefügen über einen Sender, mit dessen Hilfe sie Daten an einen Empfänger 8 berührungslos übermitteln können. Darüber hinaus verfügen die Reifendruckkontrollvorrichtungen 6a bis 6d über Umdrehungssensoren 16a bis 16d, deren Funktionsweise im Zusammenhang mit der Figur 2 erläutert wird. Der Empfänger 8 übermittelt die von den Reifendruckkontrollvorrichtungen 6a bis 6d empfangenen Daten über den Übertragungsweg 12 an eine Zentraleinheit 10. Im einfachsten Fall ist der Empfänger 8 als Empfangsantenne ausgebildet, mit Hilfe der die Zentraleinheit 10 die übermittelten Daten empfängt.

Das Reifendruckkontrollsystem enthält ferner Drehzahlsensoren 4a bis 4d, die an dem Kraftfahrzeug befestigt sind und jeweils einem Rad 2a bis 2d des Kraftfahrzeuges fest zugeordnet sind. Die Drehzahlsensoren 4a bis 4d stehen über Übertragungsweg 14a bis 14d ebenfalls mit der Zentraleinheit in Verbindung. Die Zentraleinheit 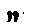 weiß", welcher Radposition die Drehzahlsensoren 4a bis 4d zugeordnet sind (die Zentraleinheit 10 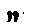 weiß" z.B., dass der Drehzahlsensor 4a der Radposition 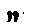 vorne links" des Kraftfahrzeuges zugeordnet ist).

Figur 2 zeigt ein Kraftfahrzeugrad 2 mit einem Umdrehungssensor 16, beispielsweise in Form eines Biegebalkens 16. Das Kraftfahrzeugrad 2 ist um die Achse 18 drehbar gelagert und der Biegebalken 16 ist in einem radialen Abstand r von der Achse 18 auf dem Kraftfahrzeugrad 2 angeordnet. Bei einer Rotation des Kraftfahrzeugrades 2 um die Achse 18 wird der Biegebalken 16 in Abhängigkeit von der Winkelposition des Kraftfahrzeugrades 2 durch die einwirkende Gravitationskraft unterschiedlich stark verbogen. Der Biegebalken kann z.B. aus piezoelektrischem Material aufgebaut sein und bei der Verbiegung des Biegelbalkens wird in ihm eine elektrische Spannung erzeugt, deren Größe in einem eindeutigen Zusammenhang zu dem Ausmaß der Verbiegung des Balkens und somit zu der Winkelposition des Kraftfahrzeugrades 2 steht.

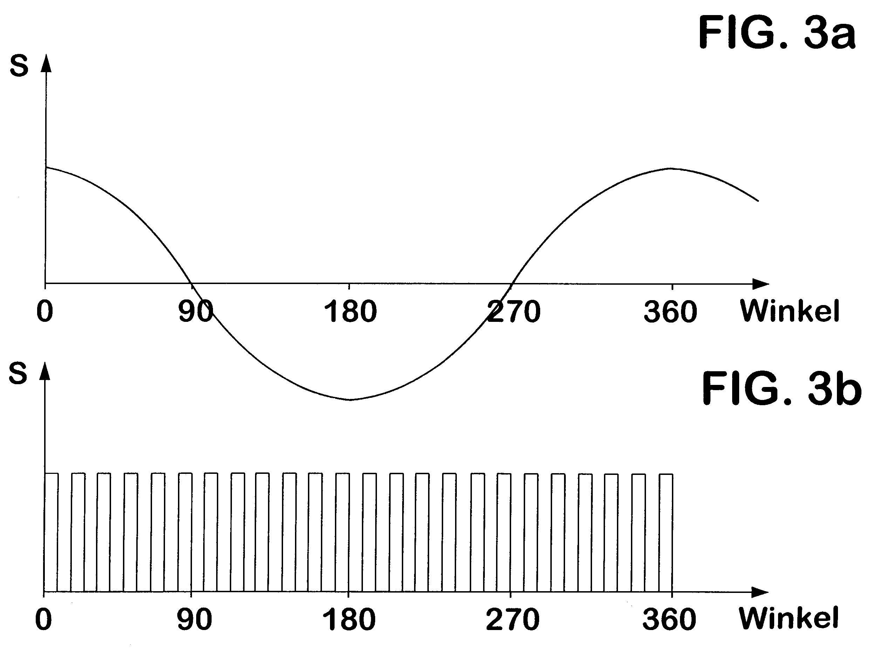

Im Zusammenhang mit der Figur 3a wird nun erläutert, wie mit Hilfe des auf dem Kraftfahrzeugrad 2 angeordneten Biegebalkens 16 bei einer Rotation des Kraftfahrzeugrades 2 um die Achse 18 ein Signal erzeugt wird. In dem Diagramm der Figur 3 ist das Signal über der Winkelposition aufgetragen, wobei die in der Figur 2 gezeigte Winkelposition 0° entsprechen soll. In der in der Figur 2 gezeigten Position des Biegebalkens 16 verläuft die Gravitationskraft g in Richtung der kraftempfindlichen Achse des Biegebalkens 16, so dass dieser eine maximale Verbiegung erfährt und somit bei der Winkelposition 0° ein maximales Signal erzeugt. Wenn sich das Kraftfahrzeugrad 2 aus der in der Fig. 2 gezeigten Position um 90° um die Achse 18 dreht, stehen die kraftempfindliche Achse des Biegebalkens 16 und die Gravitationskraft g senkrecht zueinander, so dass der Biegebalken 16 durch die Gravitationskraft g keinerlei Verformung erfährt und bei der Winkelposition 90° das von dem Biegebalken 16 erzeugte Signal somit verschwindet. Nach einer weiteren Drehung des Kraftfahrzeugrades 2 um weitere 90° verläuft die kraftempfindliche Achse des Biegebalkens 16 wiederum in Richtung der Gravitationskraft g, so dass dieser wiederum maximal verformt wird, wobei die Verformung jedoch nunmehr zu der Verformung, die sich in der Position, die die Figur 2 zeigt, ergibt, entgegengesetzt ist. Dementsprechend erzeugt der Biegebalken bei einer Winkelposition von 180° ein Signal, das den gleichen Betrag aufweist, wie bei einer Winkelposition von 0°, jedoch ein negatives Vorzeichen hat. Nach einer Drehung um weitere 90° steht die kraftempfindliche Achse des Biegelbalkens 14 wiederum senkrecht auf der Gravitationskraft g, so dass vom Biegebalken 16 bei einer Winkelposition von 270° kein Signal erzeugt wird. Nach einer Drehung des Kraftfahrzeugrades 2 um die Achse 18 um weitere 90° wird wiederum die in der Fig. 2 gezeigte Position des Biegebalkens 16 erreicht, so dass die kraftempfindliche Achse des Biegebalkens 16 wieder in Richtung der Gravitationskraft g verläuft, so dass der Biegebalken 16 wieder maximal verformt wird und bei einer Winkelposition von 360° bzw. 0° wieder ein maximales Signal erzeugt wird.

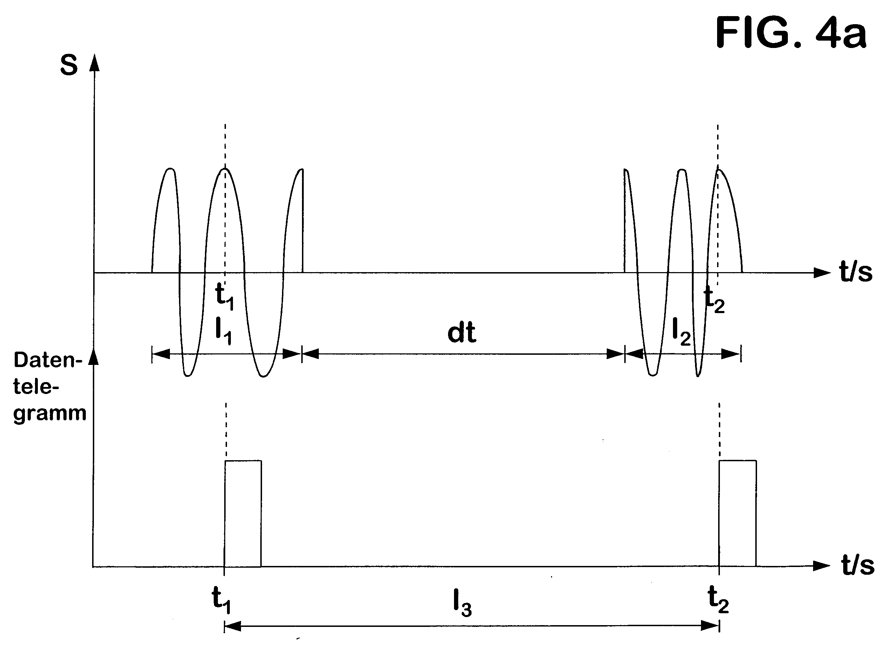

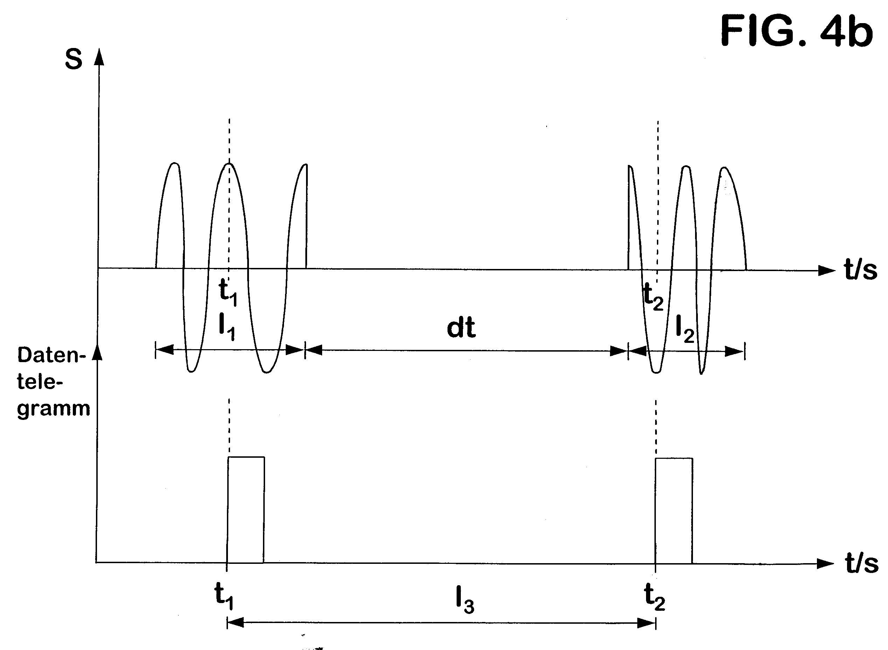

Bei einer Rotation des Kraftfahrzeugrades 2 um die Drehachse 18 wird durch den Biegelbalken 16 also ein periodisch verlaufendes Signal erzeugt. Die Signalintensität des erzeugten Signals ist jedoch so gering, dass es verstärkt werden muss. Diese Verstärkung belastet die Batterie, die die Reifendruckkontrollvorrichtung 6 und den Umdrehungssensor 16 mit Energie versorgt. Aus diesem Grunde wird der Umdrehungssensor 16 nur in bestimmten Zeitintervallen mit der Batterie verbunden, so wie es im Zusammenhang mit der Fig. 4 erläutert wird.

Die Figur 3b zeigt ebenfalls ein Diagramm, in dem das Signal, das von den Drehzahlsensoren 4a bis 4d erzeugt wird, über dem Winkel aufgetragen ist. Bei den Drehzahlsensoren 4a bis 4d kann es sich beispielsweise um ABS-Sensoren handeln, die an sich bekannt sind, und eine Zahnradscheibe mit einer gewissen Anzahl von Zähnen aufweisen. Bei einer vollen Umdrehung des Kraftfahrzeugrades 2 um die Achse 18 erzeugt jeder Zahn der Zahnradscheibe einen Impuls, so dass die Anzahl der Impulse in dem Winkelbereich von 0 bis 360° (also bei einer Umdrehung des Krftfahrzeugrades) der Anzahl der Zähne entspricht. In der Figur 3b ist das Signal für einen ABS-Sensor gezeigt, dessen Zahnscheibe über 24 Zähne verfügt, so dass das Signal zwischen 0 und 360° 24 Impulse aufweist.

Im Zusammenhang mit der Figur 4 wird nunmehr erläutert, wie in dem Reifendruckkontrollsystem die Zuordnung der Reifendruckkontrollvorrichtungen 6a bis 6d zu den Radpositionen der Kraftfahrzeugräder 2a bis 2d vorgenommen wird. Während eines ersten Zeitintervalls l₁ wird einer der Umdrehungssensoren 16a bis 16d eingeschaltet, d.h. mit der Batterie, die die Reifendruckkontrollvorrichtung und den Umdrehungssensor mit Energie versorgt, verbunden. Während des Zeitintervalls l₁ steht in der Reifendruckkontrollvorrichtung also das in der Fig. 4a gezeigte Signal zur Verfügung. Aus diesem Signal kann die dem Umdrehungssensor zugeordnete Reifendruckkontrollvorrichtung 6 bestimmen, wann das Kraftfahrzeugrad 2, auf dem sich der Umdrehungssensor 16 befindet, eine definierte Winkelposition einnimmt. Beispielsweise nimmt das Kraftfahrzeugrad zum Zeitpunkt t₁ die winkelposition 0° ein, was für die Reifendruckkontrollvorrichtung daran erkennbar ist, dass zu diesem Zeitpunkt das Signal sein Maximum aufweist. Zu dem Zeitpunkt, in dem die vorgegebene definierte Winkelposition von dem Kraftfahrzeugrad erreicht wird, wird von der Reifendruckkontrollvorrichtung 6 ein Datentelegramm an die Zentraleinheit übermittelt, das zumindest die individuelle Kennung der Reifendruckkontrollvorrichtung 6 und einen Druckwert, der in dem Reifen des Kraftfahrzeugrades 2 vorliegt, enthält.

Unmittelbar nach der Übermittlung des Datentelegrammes (nachdem also die definierte Winkelposition erreicht war) wird die Verbindung des Umdrehungssensors 16 zu der Batterie wiederum unterbrochen, so dass von dem Umdrehungssensor 16 kein auswertbares Signal erzeugt wird. Nach einer bestimmten Zeitspanne dt, die beispielsweise 30 Sekunden betragen kann, wird der Umdrehungssensor 16 wiederum für ein Zeitintervall l₂ mit der Batterie verbunden, so dass er während dieses Zeitintervalls wiederum ein auswertbares Signal erzeugt. Innerhalb des Zeitintervalls l₂ wird von der Reifendruckkontrollvorrichtung anhand des Signals wiederum eine definierte Position des Kraftfahrzeugrasdes 2, auf dem sich der Umdrehungssensor 16 befindet, ermittelt. Zu dem Zeitpuntk t₂, in dem das Kraftfahrzeugrad die zweite definierte Winkelposition einnimmt, wird von der Reifendruckkontrollvorrichtung 6 wiederum ein Datentelegramm an die Zentraleinheit 10 übermittelt. Bei dem in der Fig. 4a gezeigten Ausführungsbeispiel nimmt das Kraftfahrzeugrad zum Zeitpunkt t₂ die gleiche definierte Winkelposition, nämlich 0°, ein wie zum Zeitpunkt t₁. Das Kraftfahrzeugrad 2, auf dem sich der Umdrehungssensor 16 befindet, hat also in dem Zeitintervall l₃, das durch die Zeitpunkte t₂ und t₁ begrenzt wird, eine ganzzahlige Anzahl von Umdrehungen durchgeführt. Der Winkelversatz, den das Kraftfahrzeugrad 2 in Zeitpunkt t₂ im Vergleich zum Zeitpunkt t₁ einnimmt, verschwindet also.

Die Schonung der Batterie der Reifendruckkontrollvorrichtung kommt dadurch zustande, dass der Umdrehungssensor nicht mehr dauernd mit Energie versorgt wird, sondern nur noch während kurzer Zeitintervalle, in denen die Reifendruckkontrollvorrichtung die definierte Winkelposition feststellt. In den dazwischen liegenden Zeiträumen wird der Umdrehungssensor nicht mit Energie versorgt. Diese Zeiträume sind wesentlich größer (also mindestens eine Größenordnung größer) als die Zeitintervalle, in denen eine Energieversorgung stattfindet.

In der Zentraleinheit 10 geschieht Folgendes:
Die Zentraleinheit 10 empfängt zum Zeitpunkt t₁ das erste Datentelegramm mit der individuellen Kennung. Zum Zeitpunkt t₂ empfängt die Zentraleinheit 10 ein Datentelegramm mit der gleichen individuellen Kennung. Die Zentraleinheit 10 ist so programmiert, dass sie den Winkelversatz zwischen der ersten definierten Position und der zweiten definierten Position kennt. Für das Ausführungsbeispiel gemäß Fig. 4a bedeutet das, dass die Zentraleinheit 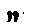 weiß", dass das zweite Datentelegramm zum Zeitpunkt t₂ erst dann losgeschickt wird, wenn das Kraftfahrzeugrad 2, von dem aus das Datentelgramm übermittelt wird, eine ganzzahlige Anzahl von Umdrehungen gemacht hat. In dem Zeitintervall l₃ überwacht die Zentraleinheit 10 die Signale aller Drehzahlsensoren 4a bis 4d. Um festzustellen, von welcher Radposition aus die Datentelegramme geschickt wurden, braucht die Zentraleinheit 10 nur noch zu prüfen, welcher der Drehzahlsensoren 4a bis 4d in dem Zeitintervall l₃ eine ganzzahlige Anzahl von Umdrehungen gemessen hat. Die entsprechende Zuordnung (Kennung der Reifendruckkontrollvorrichtung/Radposition) wird nach der Prüfung in der Zentraleinheit 10 gespeichert.

Beispiel: Die in der Fig. 4 gezeigten Datentelegramme werden von dem Kraftfahrzeugrad 2a des Kraftfahrzeuges, also von der Position vorne links, an die Zentraleinheit übermittelt, was die Zentraleinheit 10 jedoch noch nicht 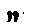 weiß". In dem Zeitintervall l₃ werden in der Zentraleinheit 10 ferner die Signale der Drehzahlsensoren 4a bis 4d ausgewertet. In der Zentraleinheit 10 wird dabei festgestellt, dass das Signal des Drehzahlsensors 4a 2.400 Impulse, das Signal des Drehzahlsensors 4b 2.450, das Signal des Drehzahlsensors 4c 2.470 und das Signal des Drehzahlsensors 4d 2.416 Impulse aufweist, wobei davon ausgegangen wird, dass die Drehzahlsensoren 4a bis 4d mit Zahnscheiben arbeiten, die 24 Zähne aufweisen. Anhand der Signale kann die Zentraleinheit 10 feststellen, dass nur das Rad, das dem Drehzahlsensor 4a zugeordnet ist, eine ganzzahlige Anzahl von Umdrehungen in den Zeitintervall l₃ gemacht hat, nur die Anzahl von 2.400 Impulsen ohne Rest durch 24 teilbar ist. Aufgrund dessen 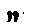 weiß" die Zentraleinheit 10, dass die in der Figur 4 gezeigten Datentelegramme von dem Kraftfahrzeugrad 2a und somit von der Radposition 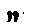 vorne links" übertragen worden sind. Die in den Datentelegrammen enthaltene individuelle Kennung kann dementsprechend mit der Radposition 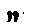 vorne links" in der Zentraleinheit 10 abgespeichert werden. Entsprechend wird die Zuordnung der anderen Reifendruckkontrollvorrichtungen 16b, 16c und 16d zu den Radpositionen des Kraftfahrzeuges getroffen. Kann keine eindeutige Zuordnung getroffen werden, z.B. weil von zwei ABS-Sensoren eine ganzzahlige Umdrehungszahl gemessen wurde, wird das Verfahren wiederholt.

Figur 4b zeigt ein Diagramm, das weitgehend dem Diagramm gemäß der Fig. 4a entspricht. Der einzige Unterschied ist darin zu sehen, dass der Winkelversatz in der Position des Kraftfahrzeugrades zwischen dem Zeitpunkt t₂ und t₁ nicht 0°, sondern 180° beträgt. In der Zentraleinheit 10 ist das Zuordnungsverfahren in diesem Fall an sich genauso durchzuführen, wie es im Zusammenhang mit der Fig. 4a erläutert worden ist. Der einzige Unterschied ist darin zu sehen, dass die Zentraleinheit 10 für die Zuordnung nicht ein Signal eines Drehzahlsensors 4a bis 4d 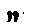 suchen" muss, dessen Impulsanzahl nach einer Division durch 24 einen Rest von 0 aufweist, vielmehr muss die Zentraleinheit 10 nach einem Signal suchen, dessen Impulsanzahl nach einer Division durch 24 einen Rest von 12 aufweist (bei einer Anzahl von 24 Impulsen pro Umdrehung des Kraftfahrzeugrades 2 entspricht eine Impulszahl von 12 nämlich gerade den Winkelversatz von 180°). Auf entsprechende Art und Weise kann das Verfahren mit jedem beliebigen Winkelversatz durchgeführt werden.

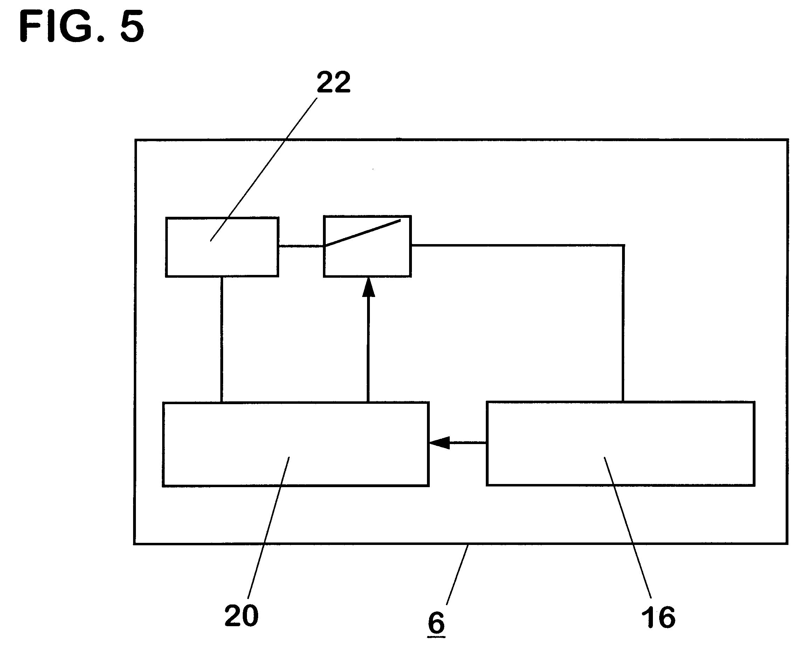

Figur 5 zeigt in stark schematisierter Darstellung eine Reifendruckkontrollvorrichtung 6, die u.a. eine Schaltung 20, eine Batterie 22 und einen Umdrehungssensor 16 enthält. Die Schaltung 20 wird ständig von der Batterie 22 mit Energie versorgt. Die Schaltung 20 ist so ausgelegt, dass sie die Energieversorgung des Umdrehungssensors 16 durch die Batterie 22 im Allgemeinen unterbricht (angedeutet durch den geöffneten Schalter in der Fig. 5) und nur in bestimmten Zeitintervallen die Batterie 22 mit dem Umdrehungssensor 16 verbindet (siehe z.B. Fig. 4 die Zeitintervalle l₁ und l₂).

### Bezugszeichenliste

- 2a - 2d: Kraftfahrzeugrad
- 4a - 4d: Sensor, der Rad fest zugeordnet ist
- 6a - 6d: Reifendruckkontrollvorrichtung mit Sensor
- 8a - 8d: Empfänger
- 10: Zentraleinheit
- 12a - 12d: Übertragungsweg von Empfänger 8a - 8d zur Zentraleinheit 10
- 14a - 14d: Übertragungsweg von Sensor 4a - 4d zur Zentraleinheit 10
- 16a - 16d: Sensoren der Reifendruckkontrollvorrichtungen 6a - 6d
- 18: Achse
- 20: Schaltung
- 22: Batterie

## Patentansprüche

1. Verfahren zur Durchführung der Zuordnung von Reifendruckkontrollvorrichtungen (6a - 6d) zu Radpositionen in einem Reifendruckkontrollsystem eines Kraftfahrzeuges, das u.a. über folgende Bestandteile verfügt:
- eine Anzahl von Rädern (2a - 2d), wobei jedem Rad (2a - 2d) eine Reifendruckkontrollvorrichtung (6a - 6d) zugeordnet ist, die in zeitlichen Abständen eine individuelle Kennung an eine Zentraleinheit (10) aussendet
- Drehzahlsensoren (4a - 4d), von denen jeweils einer ortsfest einem Rad (2a - 2d) des Kraftfahrzeuges zugeordnet ist, wobei die Zuordnung der Drehzahlsensoren (4a - 4d) zu den Radpositionen der Zentraleinheit (10) bekannt ist
- Umdrehungssensoren (16a - 16d), von denen jeweils einer einer Reifendruckkontrollvorrichtung (6a - 6d) zugeordnet ist
- eine Zentraleinheit (10), in der die Zuordnung (Kennung der Reifendruckkontrollvorrichtung (6a - 6d / Radposition) für jedes Rad (2a - 2d) gespeichert ist
- bei dem die Zuordnung einer Reifendruckkontrollvorrichtung (6a - 6d) zu der -
- Radposotion im Betrieb des Kraftfahrzeuges vorgenommen wird,
**dadurch gekennzeichnet**, dass
das Verfahren in folgenden Schritten durchgeführt wird:
- der in der Reifendruckkontrollvorrichtung (6a - 6d) zugeordnete Sensor (16a - 16d) wird für ein erstes Zeitintervall (l₁) eingeschaltet
- während des ersten Zeitintervalls wird aus dem Sensorsignal eine erste definierte Winkelposition des Rades, dem der Sensor (16a - 16d) zugeordnet ist, bestimmt
- die Reifendruckkontrollvorrichtung (6a - 6d) übermittelt zu einem ersten Zeitpunkt (t₁), in dem das Rad (2a - 2d) diese erste definierte Winkelposition einnimmt, die individuelle Kennung an die Zentraleinheit
- der gleiche Sensor (16a - 16d) wird später für ein zweites Zeitintervall (l₂) eingeschaltet
- während des zweiten Zeitintervalls wird aus dem Sensorsignal eine zweite definierte Winkelposition des Rades (2a - 2d), dem der Sensor (16a - 16d) zugeordnet ist, bestimmt
- die Reifendruckkontrollvorrichtung (6a - 6d) übermittelt zu einem zweiten Zeitpunkt (t₂), in dem das Rad diese definierte Winkelposition einnimmt, ihre individuelle Kennung an die Zentraleinheit (10), wobei die Zentraleinheit (10) den Winkelversatz zwischen der ersten definierten Winkelposition und der zweiten definierten Winkelposition kennt
- in dem Zeitintervall (l₃) von dem ersten Zeitpunkt (t₁) bis zu dem zweiten Zeitpunkt (t₂) wird mit den Drehzahlsensoren (4a - 4d) die Umdrehungszahl der Räder (2a- 2d) gemessen
- die gemessenen Umdrehungszahlen werden an die Zentraleinheit (10) übermittelt
- in der Zentraleinheit (10) wird geprüft, von welchem Drehzahlsensor (4a - 4d) bzw. von welcher Radposition eine Umdrehungszahl übermittelt wurde, die nach Abzug der ganzzahligen Umdrehungszahl denselben Winkelversatz aufweist, der den Winkelversatz zwischen der ersten definierten Winkelposition und der zweiten definierten Winkelposition entspricht
- die entsprechende Radposition wird in der Zentraleinheit (10) der von der Reifendruckkontrollvorrichtung (6a - 6d) übermittelten individuellen Kennung zugeordnet.

2. Verfahren nach Anspruch 1, dadurch gekennzeichnet, dass die erste definierte Winkelposition mit der zweiten definierten Winkelposition übereinstimmt, so dass das Rad (2a - 2d) in dem Zeitintervall von dem ersten Zeitpunkt bis zu dem zweiten Zeitpunkt eine ganzzahlige Anzahl von Umdrehungen vollführt.

3. Verfahren nach einem der Ansprüche 1 bis 2, dadurch gekennzeichnet, dass die Zeitintervalle, in denen die den Reifendruckkontrollvorrichtungen (6a - 6d) zugeordneten Sensoren (16a - 16d) eingeschaltet werden, eine fest vorgegebene Zeitspanne umfassen.

4. Verfahren nach einem der Ansprüche 1 bis 2, dadurch gekennzeichnet, dass die den Reifendruckkontrollvorrichtungen (6a - 6d) zugeordneten Sensoren (16a - 16d), nachdem sie eingeschaltet worden sind, unmittelbar nach dem Zeitpunkt ausgeschaltet werden, in dem das von dem entsprechenden Sensor erzeugte Signale die definierte Winkelposition anzeigt.

5. Verfahren nach einem der Ansprüche 1 bis 4, dadurch gekennzeichnet, dass zu dem zweiten Zeitpunkt (t₂) neben der individuellen Kennung zumindest die Dauer T der letzten Umdrehung des Rades, die das Rad vor der Datenübermittlung gemacht hat, von der Reifendruckkontrollvorrichtung (6a - 6d) an die Zentraleinheit (10) übermittelt wird.

6. Reifendruckkontrollvorrichtung (6a - 6d), der ein Umdrehungssensor (16a - 16d) zugeordnet ist und die einen Energiespeicher (22) enthält, der den Umdrehungssensor (16a - 16d) mit Energie versorgt, wobei von dem Umdrehungssensor (16a - 16d) während der Energieversorgung ein auswertbares Signal erzeugt wird, dadurch gekennzeichnet, dass die Reifendruckkontrollvorrichtung (6a - 6d) über eine Schaltung verfügt, die den Umdrehungssensor in Zeitintervallen mit dem Energiespeicher (22) verbindet und ansonsten eine Verbindung des Umdrehungssensors (16a - 16d) zum Energiespeicher (22) unterbricht.
